# EUROPÄISCHE PATENTSCHRIFT

(11) **EP 3 751 718 B1**
(45) Veröffentlichungstag und Bekanntmachung des Hinweises auf die Patenterteilung: **07.12.2022**
(21) Anmeldenummer: 20175205.2
(22) Anmeldetag: 18.05.2020
(51) Int. Cl.: H02M 7/483

(54) **VERFAHREN ZUR FEHLERBEHANDLUNG EINES FEHLERS IN EINER GLEICHSPANNUNGSLEITUNG SOWIE EINE STROMRICHTERANORDNUNG ZUM DURCHFÜHREN DES VERFAHRENS**
METHOD FOR HANDLING OF A FAULT IN A DIRECT CURRENT LINE AND INVERTER ASSEMBLY FOR IMPLEMENTING THE METHOD
PROCÉDÉ DE TRAITEMENT DE DÉFAUTS DANS UNE LIGNE DE TENSION CONTINUE AINSI QUE DISPOSITIF CONVERTISSEUR DE COURANT PERMETTANT LA MISE EN OEUVRE DUDIT PROCÉDÉ

(30) Priorität: 12.06.2019 DE 102019208509
(43) Veröffentlichungstag der Anmeldung: 16.12.2020
(73) Patentinhaber: Siemens Energy Global GmbH & Co. KG, 81739 München (DE)
(72) Erfinder: Dallmer-Zerbe, Kilian, 91088 Bubenreuth (DE); Ergin, Dominik, 91083 Baiersdorf (DE); Gafur, Ilhom, 90419 Nürnberg (DE); Kontos, Epameinondas, 90402 Nürnberg (DE); Semmler, Sebastian, 90427 Nürnberg (DE)

(56) Entgegenhaltungen:
- EP-A2- 2 602 927
- ZENG RONG ET AL: "Design and Operation of a Hybrid Modular Multilevel Converter", IEEE TRANSACTIONS ON POWER ELECTRONICS, INSTITUTE OF ELECTRICAL AND ELECTRONICS ENGINEERS, USA, Bd. 30, Nr. 3, 1. März 2015 (2015-03-01), Seiten 1137-1146, XP011561445, ISSN: 0885-8993, DOI: 10.1109/TPEL.2014.2320822 [gefunden am 2014-10-14]
- LU MAOZENG ET AL: "Fundamental-Frequency Reactive Circulating Current Injection for Capacitor Voltage Balancing in Hybrid-MMC HVDC Systems During Riding Through PTG Faults", IEEE TRANSACTIONS ON POWER DELIVERY, IEEE SERVICE CENTER, NEW YORK, NY, US, Bd. 33, Nr. 3, 1. Juni 2018 (2018-06-01), Seiten 1348-1357, XP011680389, ISSN: 0885-8977, DOI: 10.1109/TPWRD.2017.2755505 [gefunden am 2018-04-06]
- LU MAOZENG ET AL: "Imbalance Mechanism and Balanced Control of Capacitor Voltage for a Hybrid Modular Multilevel Converter", IEEE TRANSACTIONS ON POWER ELECTRONICS, INSTITUTE OF ELECTRICAL AND ELECTRONICS ENGINEERS, USA, Bd. 33, Nr. 7, 1. Juli 2018 (2018-07-01), Seiten 5686-5696, XP011679873, ISSN: 0885-8993, DOI: 10.1109/TPEL.2017.2743780 [gefunden am 2018-03-19]

## Beschreibung

Die Erfindung betrifft ein Verfahren zur Fehlerbehandlung eines Fehlers auf einer Gleichspannungsseite einer Stromrichteranordnung mit einem modularen Mehrstufenstromrichter, der Schaltmodule umfasst, die jeweils über mehrere Halbleiterschalter und wenigstens einen Energiespeicher verfügen, wobei einige der Schaltmodule Schaltmodule eines ersten Typs und einige andere der Schaltmodule Schaltmodule eines zweiten Typs sind, wobei im Betrieb der Stromrichteranordnung an Anschlussklemmen der Schaltmodule des ersten Typs jeweils eine positive Schaltmodulspannung, eine negative Schaltmodulspannung oder eine Nullspannung erzeugt werden, und an Anschlussklemmen der Schaltmodule des zweiten Typs jeweils eine positive Schaltmodulspannung oder eine Nullspannung erzeugt werden. Die Stromrichteranordnung weist eine Gleichspannungsseite zum Verbinden mit einer Gleichspannungsleitung bzw. einem Gleichspannungsnetz auf, beispielsweise einer Hochspannungsgleichstromübertragungsleitung. Ferner weist die Stromrichteranordnung eine Wechselspannungsseite zum Verbinden mit einem Wechselspannungsnetz auf, beispielsweise einem elektrischen Übertragungsnetz. Insbesondere ist die Stromrichteranordnung zum Umwandeln einer Wechselspannung des Wechselspannungsnetzes in eine Gleichspannung, oder umgekehrt, eingerichtet.

Eine Stromrichteranordnung der genannten Art ist aus dem Beitrag "Optimized Design of a Hybrid-MMC and Evaluation of Different MMC Topologies" von Viktor Hoffmann und Mark-M. Bakran (EPE'16 ECCE Europe) bekannt. Dort ist eine Stromrichteranordnung mit einem modularen Mehrstufenstromrichter offenbart, der zwischen einem Wechselspannungsnetz und einem Gleichspannungsnetz geschaltet ist. Der Mehrstufenstromrichter weist sechs Stromrichterarme mit Schaltmodulen auf, die jeweils zwischen einem Gleichspannungsanschluss und einem Wechselspannungsanschluss angeordnet sind. In jedem Stromrichterarm sind zwei Typen von Schaltmodulen eingesetzt, nämlich Vollbrückenschaltmodule und Halbbrückenschaltmodule. Bei der bekannten Stromrichteranordnung wird eine Armspannung Varm erzeugt, die einen Gleichspannungsanteil und einen Wechselspannungsanteil aufweist.

Eine Herausforderung der Hochspannungsgleichstromübertragungssysteme besteht in der Detektion und Behandlung von Isolationsfehlern auf der Gleichspannungsseite der Stromrichteranordnung, also Fehlern, die in der Gleichspannungsleitung bzw. im Gleichspannungsnetz verortet sind. Diese Isolationsfehler können beispielsweise umweltbedingte Kurzschlüsse zwischen einzelnen Leitern oder auch Erdschlüsse sein. Eine schnelle und zuverlässige Behandlung solcher Fehler spielt hierbei eine wichtige Rolle. In einem besonders ungünstigen Fall kann ein gleichspannungsseitiger Fehler zur Beschädigung der Stromrichteranordnung führen. Eine übliche Vorgehensweise zur Fehlerbehandlung besteht im Trennen der Stromrichteranordnung von dem Wechselspannungsnetz und dem Abwarten einer relativ langen Zeit, bis der gleichspannungsseitige Fehler behoben ist.

Bei dem gleichspannungsseitigen Fehler kann es zu einem enormen Anstieg eines gleichspannungsseitigen Stromes Idc gemäß der folgenden Gleichung kommen: dIdc/dt = (Uconv - Udc)/Lconv, wobei Uconv die vom Mehrstufenstromrichter gestellte gleichspannungsseitige Nennspannung, Udc die Spannung im Gleichspannungsnetz und Lconv die Gesamtinduktivität der Stromrichteranordnung bezeichnen. Zur aktiven Senkung des gleichspannungsseitigen Stromes Idc ist demnach eine Senkung bzw. sogar eine Umpolung der Stromrichterspannung Uconv notwendig.

Die EP 2 602 927 A2 offenbart eine Stromrichteranordnung mit zwei Schaltmodultypen, wobei im Falle eines gleichspannungsseitigen Fehlers eine Blindleistung mit einem angeschlossenen Wechselspannungsnetz ausgetauscht wird.

Weitere Verfahren zum Regeln eines hybriden Multilevel-Stromrichters sind aus den Beiträgen von Zeng Rong et al. "Design and Operation of a Hybrid Modular Multilevel Converter", IEEE TRANSACTIONS ON POWER ELECTRONICS, INSTITUTE OF ELECTRICAL AND ELECTRONICS ENGINEERS, USA, Lu Maozeng et al. "Fundamental-Frequency Reactive Circulating Current lnjection for Capacitor Voltage Balancing in Hybrid-MMC HVDC Systems During Riding Through PTG Faults", IEEE TRANSACTIONS ON POWER DELIVERY, IEEE SERVICE CENTER, NEW YORK, NY, US und Lu Maozeng et al.: "lmbalance Mechanism and Balanced Control of Capacitor Voltage for a Hybrid Modular Multilevel Converter", IEEE TRANSACTIONS ON POWER ELECTRONICS, INSTITUTE OF ELECTRICAL AND ELECTRONICS ENGINEERS, USA bekannt.

Die Aufgabe der Erfindung besteht darin, ein artgemäßes Verfahren anzugeben, das eine möglichst zuverlässige und effiziente Fehlerbehandlung erlaubt.

Die Aufgabe wird bei einem eingangs genannten Verfahren erfindungsgemäss, nach Anspruch 1, dadurch gelöst, dass nachdem der gleichspannungsseitige Fehler detektiert wurde eine Fehlerbehandlungsregelung der Stromrichteranordnung mit einem proportional-differentiellen Regelverhalten aktiviert wird und ein Blindleistungsaustausch zwischen der Stromrichteranordnung und dem Wechselspannungsnetz veranlasst wird, wobei die ausgetauschte Blindleistung von einer Richtung des Wirkleistungsflusses vor dem Fehlereintritt abhängt. Die Detektion des Fehlers kann auf jede geeignete, dem Fachmann bekannte Weise erfolgen. Zum Beispiel ist eine Überwachung der gleichspannungsseitigen Spannung und deren Einbruchs im Fehlerfall möglich. Ebenso kann ein entsprechender Stromanstieg auf der Gleichspannungsseite der Stromrichteranordnung detektiert werden. Erfindungsgemäß wird ein Umschalten zwischen einer Stromrichterregelung für den Normalbetrieb bzw. Nennbetrieb der Stromrichteranordnung (beispielsweise mittels einer Proportionalregelung) und einer separaten Fehlerbehandlungsregelung durchgeführt. Beide können in einer Regelungseinrichtung der Stromrichteranordnung hinterlegt sein. Die Regelung der Stromrichteranordnung wird insbesondere durch eine der jeweiligen Regelungsvorschrift entsprechende Ansteuerung der Schaltmodule realisiert. Die Ansteuerung der Schaltmodule wird dabei durch die Ansteuerung der Halbleiterschalter bewirkt. Die Halbleiterschalter können dementsprechend geeignete steuerbare, insbesondere abschaltbare Halbleiterschalter, wie beispielsweise IGBT, IGCT, MOSFET oder dergleichen sein.

Eigene Untersuchungen haben ergeben, dass das Verhalten des Mehrstufenstromrichters gegenüber dessen Wechselspannungsseite, insbesondere gegenüber dem Wechselspannungsnetz eine entscheidende Rolle im Fall des gleichspannungsseitigen Fehlers spielen kann. Insbesondere kann eine Beendigung der Wirkleistungsübertragung nach Fehlereintritt zu einer (unter Umständen starken) Reduktion von Wechselstromkomponenten der Armströme in den Stromrichterarmen des Mehrstufenstromrichters führen. Gleichzeitig kann es zu einem Anstieg der entsprechenden Gleichstromkomponenten der Armströme kommen. Dies kann, insbesondere bei einem Stromrichter mit den beiden Typen von Schaltmodulen, dazu führen, dass die Armstromverläufe keine Stromnulldurchgänge mehr aufweisen. Dies hat wiederum zur Folge, dass der Mehrstufenstromrichter in seiner Balancierungsfähigkeit stark eingeschränkt sein kann. Als Balancierung wird in diesem Zusammenhang generell ein Energieausgleich innerhalb des Mehrstufenstromrichters verstanden. Bei Ausfall der Balancierung können starke Ungleichmäßigkeiten in den Spannungen der einzelnen Schaltmodule bzw. deren Energiespeichern entstehen, was für den Betrieb der Stromrichteranordnung nicht nur höchst nachteilig ist, sondern auch direkt zum Blockieren der Anlage zum Kompensationsschutz führen. Durch die Umschaltung der Stromrichterregelung auf die Fehlerbehandlungsregelung wird vorteilhaft erreicht, dass die Stromrichterregelung im Fehlerfall eine ausreichende Dynamik aufweist, um eine ausreichend schnelle Balancierung des Mehrstufenstromrichters im Fehlerfall zu ermöglichen.

Erfindungsgemäß wird mittels der Stromrichteranordnung nach Fehlerantritt wechselspannungsseitig Blindleistung bereitgestellt. Auf diese Weise kann das Wechselspannungsnetz nach Fehlerantritt gestützt werden. Bricht beispielsweise die Wirkleistungsabgabe an dem Wechselspannungsnetz im Fehlerfall ab, kann die Netzspannung durch eine Einspeisung induktiver Blindleistung gestützt werden. Durch das Erzeugen von zusätzlichen Wechselstromkomponenten im Armstromverlauf wird der Energieaustausch zwischen den Stromrichterarmen und den Schaltmodultypen ermöglicht bzw. erleichtert. Die gleichmäßigere Verteilung der Energie im Stromrichter während der Fehlerklärung ermöglicht eine wesentlich bessere Ausnutzung der vorhandenen Hardware. Hierdurch ist es möglich, die Anzahl der installierten Schaltmodule zu optimieren, was eine Verringerung der Verlustkosten und der Hardwarekosten erlaubt.

Erfindungsgemäß wird induktive Blindleistung ins Wechselspannungsnetz eingespeist, falls vor Fehlereintritt Wirkleistung ins Wechselspannungsnetz abgegeben wurde. Dementsprechend wird ein Sollwert für die Stromrichterregelung derart vorgegeben, dass mittels des Mehrstufenstromrichters induktive Blindleistung erzeugt wird.

Erfindungsgemäß wird kapazitive Blindleistung ins Wechselspannungsnetz eingespeist, falls vor Fehlereintritt Wirkleistung aus dem Wechselspannungsnetz aufgenommen wurde. Dementsprechend wird dazu ein Sollwert der Stromrichterregelung derart vorgegeben, dass mittels des Mehrstufenstromrichters kapazitive Blindleistung erzeugt wird.

Die Höhe des Blindstromes, welcher im Fehlerfall in das Wechselspannungsnetz eingespeist werden soll, kann auf verschiedene Weise bestimmt werden. Dabei ist zu beachten, dass ein hoher Blindstrom zwar erwünscht ist, eine Überschreitung eines Höchstwertes jedoch zu einem Blockieren der Stromrichteranordnung führen kann.

Gemäß einer Ausführungsform der Erfindung wird für einen der Blindleistung zugeordneten Blindstrom ein konstanter Wert vorgegeben. Der konstante Wert hängt lediglich von den Auslegungsparametern der Stromrichteranordnung ab. Geeigneterweise ist der Wert derart festgelegt, dass es damit unter Berücksichtigung aller Fehlerszenarien zu keiner Überschreitung des maximal zulässigen Armstromes kommen kann.

Ein der Blindleistung zugeordneter Blindstrom kann ferner dynamisch anhand von Stromrichtermesswerten und Stromrichtersollwerten ermittelt werden. Bei der dynamischen Bestimmung des zulässigen Blindstromes wird auf Messwerte und/oder Regelsollwerte zurückgegriffen, um den maximal zulässigen Blindstrom zu bestimmen. Der Armstrom setzt sich dabei im Wesentlichen aus einen zulässigen Wechselstrom, einem Balancierungsstrom und einem Gleichstrom zusammen. Der fließende Gleichstrom ist dabei vom Fehlerfall abhängig und unterliegt im Allgemeinen starken Schwankungen. Aus den genannten Anteilen lässt sich dynamisch, ausgehend vom maximal zulässigen Armstrom der maximal zulässige Wechselstrom pro Stromrichterarm berechnen. Hieraus lässt sich bei Kenntnis des wechselspannungsseitigen Wechselstromes der maximal zulässige Blindstrom ermitteln. Zur Erhöhung der Genauigkeit der Berechnung können zudem weitere Größen berücksichtigt werden, wie zum Beispiel eine Halbleitertemperatur in oder an den Schaltmodulen.

Vorzugsweise liegt die Nennspannung der Schaltmodule des ersten Typs und/oder des zweiten Typs zwischen 1 kV und 5 kV. Durch Verwendung der Schaltmodule im Hochspannungsbereich kann auch für eine zu stellende Spannung von mehreren Hundert Kilovolt eine relativ kleine Anzahl der Schaltmodule ausreichend sein.

Eine besonders vorteilhafte Form die Schaltmodule des ersten Typs sind die dem Fachmann bekannten Vollbrückenschaltmodule. Sie sind eine besonders günstige Variante der Schaltmodule des ersten Typs. Weitere Beispiele des Schaltmoduls des ersten Typs sind das sogenannte Clamp-Doppel-Halbbrückenmodul, das Cross-Connected-Halbbrückenmodul und das Clamp-Doppel-Vollbrückenmodul. Vorzugsweise aber nicht notwendigerweise sind alle Schaltmodule des ersten Typs gleichartig aufgebaut.

Vorzugsweise sind die Schaltmodule des zweiten Typs Halbbrückenschaltmodule. Die Halbbrückenschaltmodule können zwar zum Aufbau der negativen Spannung nicht beitragen, erlauben aber relativ niedrige Betriebskosten aufgrund relativ niedriger elektrischer Verluste im Betrieb. Vorzugsweise aber nicht notwendigerweise sind alle Schaltmodule des zweiten Typs gleichartig aufgebaut.

Gemäß einer Ausführungsform der Erfindung wird mittels eines zusätzlichen gleichspannungsseitigen Parallelpfades mit einer Diode und einem Ableiter eine gleichspannungsseitige negative Spannung begrenzt. Der Parallelpfad kann zwischen einem Gleichspannungspol und Erde angeordnet sein. Die Diode kann selbstredend auch eine geeignete Anzahl an einzelnen Diodenelementen umfassen. Die Begrenzung der negativen Spannung ist aus dem folgenden Grund vorteilhaft. Durch die gleichspannungsseitigen Vorgänge beim Fehler können Spannungswellen auftreten, die sich entlang der Gleichspannungsseite zwischen der Stromrichteranordnung und dem Fehlerort verlagern bzw. ausbreiten können. Durch solche Wanderwellen treten negative Spannungen auf. Höhe, Kurvenform und Dauer der negativen Spannung hängt von Leitungstyp und Fehlerort ab. Die Höhe der negativen Spannung kann dabei auch höher sein, als die ursprüngliche DC-Spannung vor Fehlereintritt. Der Parallelpfad mit Diode/Ableiter begrenzt diese negative Spannung, bevor sie den Stromrichter erreichen und u.U. beschädigen können.

Die Erfindung betrifft ferner eine Stromrichteranordnung mit einem modularen Mehrstufenstromrichter, der Schaltmodule umfasst, die jeweils über mehrere Halbleiterschalter und wenigstens einen Energiespeicher verfügen, wobei einige der Schaltmodule Schaltmodule eines ersten Typs und einige andere der Schaltmodule Schaltmodule eines zweiten Typs sind, wobei im Betrieb der Stromrichteranordnung an Anschlussklemmen der Schaltmodule des ersten Typs jeweils eine positive Schaltmodulspannung, eine negative Schaltmodulspannung oder eine Nullspannung erzeugt werden, und an Anschlussklemmen der Schaltmodule des zweiten Typs jeweils eine positive Schaltmodulspannung oder eine Nullspannung erzeugt werden.

Die Aufgabe der Erfindung ist es, eine solche Stromrichteranordnung anzugeben, die eine möglichst effiziente und zuverlässige Fehlerbehandlung gleichspannungsseitiger Fehler erlaubt.

Die Erfindung wird bei einer artgemäßen Stromrichteranordnung erfindungsgemäss, nach Anspruch 8, durch eine Regelungseinrichtung gelöst, die zum Durchführen eines erfindungsgemäßen Verfahrens eingerichtet ist.

Die Vorteile der erfindungsgemäßen Stromrichteranordnung ergeben sich insbesondere aus den Vorteilen, die zuvor im Zusammenhang mit dem erfindungsgemäßen Verfahren beschrieben wurden.

Die Erfindung wird im Folgenden anhand der Figuren 1 bis 3 weiter erläutert.
Figur 1 zeigt ein Ausführungsbeispiel einer erfindungsgemäßen Stromrichteranordnung in einer schematischen Darstellung;
Figur 2 zeigt ein Beispiel eines Schaltmoduls des ersten Typs in einer schematischen Darstellung;
Figur 3 zeigt ein Beispiel eines Schaltmoduls des zweiten Typs in einer schematischen Darstellung.

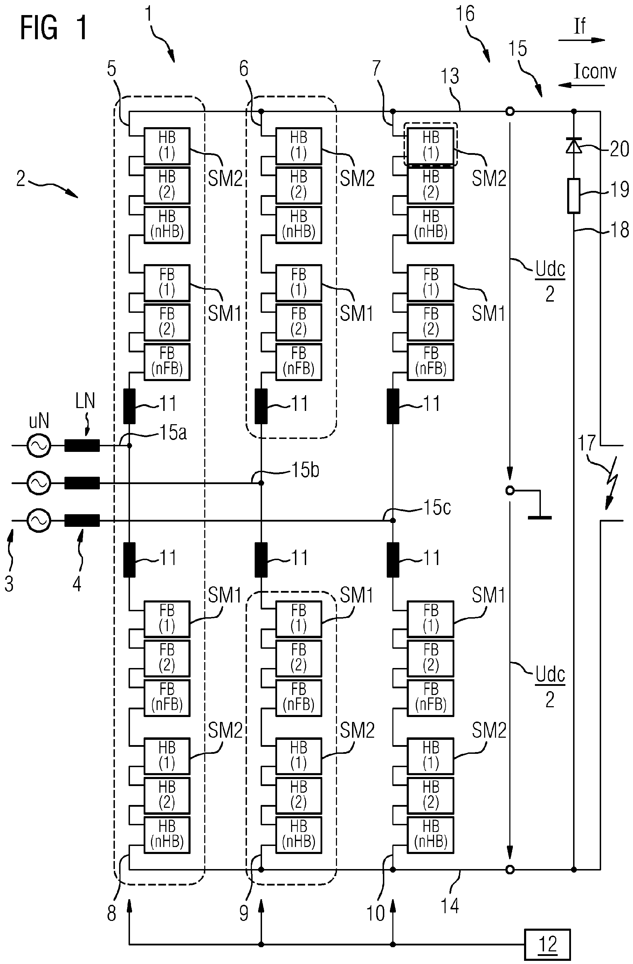

In Figur 1 ist eine Stromrichteranordnung 1 dargestellt. Die Stromrichteranordnung 1 umfasst Halbleiterschalter in Schaltmodulen, die zu einem modularen Mehrstufenstromrichter (MMC) 2 verbunden sind, der im dargestellten Beispiel zur Umwandlung einer Wechselspannung eines Wechselspannungsnetzes 3, mit dem der MMC 2 mittels eines Netztransformators 4 verbunden ist (wobei lediglich die sekundärseitigen Wicklungen LN figürlich dargestellt sind), in eine Gleichspannung Udc.

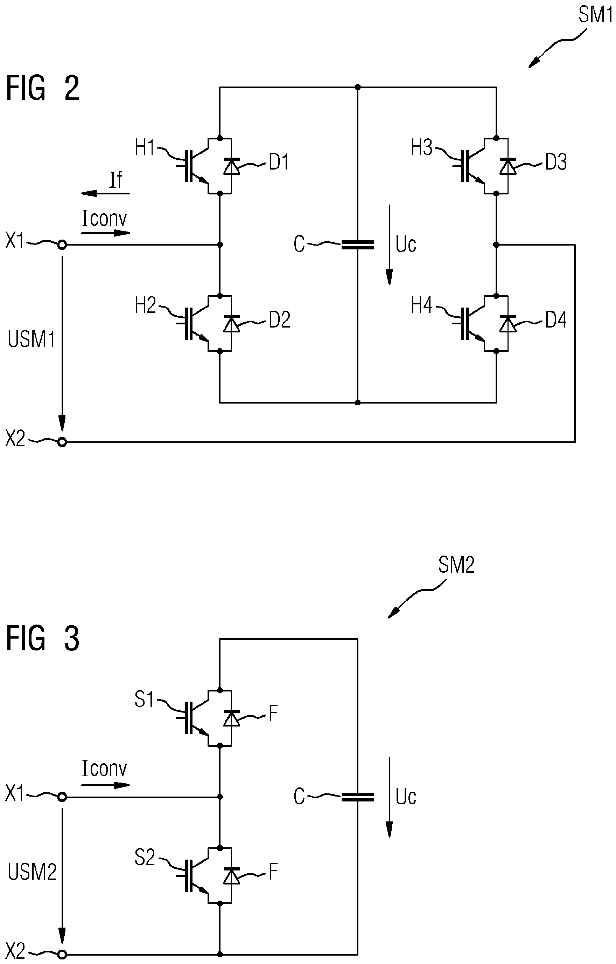

Der MMC 2 umfasst sechs Stromrichterarme 5-10, die miteinander in einer Doppelsternschaltung verbunden sind. Jeder der gleichartig aufgebauten Stromrichterarme 5-10 umfasst eine Arminduktivität 11 sowie eine Reihenschaltung zweipoliger Schaltmodule SM1 des ersten Typs und Schaltmodule SM2 des zweiten Typs. Auch die Anzahl der Schaltmodule SM1 bzw. SM2 in jedem Stromrichterzweig 5-10 ist grundsätzlich beliebig und an die jeweilige Anwendung anpassbar. Die Schaltmodule SM1 des ersten Typs können beispielsweise Vollbrückenschaltmodule, die Schaltmodule SM2 des zweiten Typs beispielsweise Halbbrückenschaltmodule sein, auf deren Aufbau in den nachfolgenden Figuren 2 und 3 näher eingegangen wird. Jedes Schaltmodul SM umfasst steuerbare Halbleiterschalter, z.B. IGBT oder dergleichen, einen Energiespeicher sowie eine Steuerungsbaugruppe, mittels der die Halbleiterschalter angesteuert werden können. Die Stromrichteranordnung 1 ist grundsätzlich nicht auf die Verwendung von genau zwei unterschiedlichen Schaltmodul-Typen eingeschränkt, so dass darüber hinaus grundsätzlich denkbar ist, dass die verwendete Stromrichteranordnung weitere Schaltmodul-Typen umfasst.

Die Stromrichteranlage 1 umfasst ferner eine zentrale Regelungseinrichtung 12, die zum Regeln des MMC 2 und zum Ansteuern der Schaltmodule SM eingerichtet ist. Die Regelungseinrichtung 12 erhält von einer übergeordneten Instanz Vorgaben bezüglich der geforderten Wirkleistung und Blindleistung, die von der Regelungseinheit in Sollwerte einiger Regelungsparameter umgesetzt werden. Die Regelungsparameter können beispielsweise eine wechselspannungsseitige Spannung Uac, ein wechselspannungsseitiger Strom Iac, ein gleichspannungsseitiger Strom Idc und/oder eine gleichspannungsseitige Spannung Udc sein. In Stromrichteranlagen, die als ein symmetrischer Monopol konzipiert sind, sind eine Spannung zwischen dem positiven Gleichspannungspol 13 und dem Erdpotenzial, Udc+ = Udc/2, und eine Spannung zwischen dem negativen Gleichspannungspol 14 und dem Erdpotenzial, Udc- = Udc/2, von Bedeutung. Die beiden Gleichspannungspole 13, 14 sind auf einer Gleichspannungsseite 16 der Stromrichteranordnung mit einer Gleichspannungsleitung 15 verbunden. Durch ein Blitzzeichen 17 ist ein Pol-zu-Pol-Fehler auf der Gleichspannungsseite 16 angedeutet. Die Stromrichtung des entsprechenden Fehlerstromes ist in Figur 1 durch einen Pfeil If angedeutet.

Die Stromrichteranordnung 1 umfasst ferner einen zusätzlichen gleichspannungsseitigen Parallelpfad 18, in dem eine Diode 20 und ein Ableiter 19 angeordnet sind. Mittels dieses zusätzlichen Parallelpfades 18 kann eine gleichspannungsseitige negative Spannung begrenzt werden. Auf diese Weise können negative Auswirkungen sogenannter fehlerbedingte Wanderwelleneffekte auf den Stromrichter 2 minimiert werden.

Figur 2 zeigt ein Schaltmodul SM1 des ersten Typs, das für den Stromrichter der Figur 1 geeignet ist, und das in einer Vollbrückenschaltung geschaltet ist. Das Schaltmodul SM1 umfasst einen ersten abschaltbaren Halbleiterschalter H1, dem eine erste Freilaufdiode D1 antiparallel geschaltet ist, einen zweiten abschaltbaren Halbleiterschalter H2, dem eine zweite Freilaufdiode D2 antiparallel geschaltet ist, wobei der erste und der zweite Halbleiterschalter H1, H2 in einer ersten Halbleiterreihenschaltung miteinander verbunden sind und gleiche Durchlassrichtung aufweisen. Das Schaltmodul SM1 umfasst ferner einen dritten abschaltbaren Halbleiterschalter H3, dem eine dritte Freilaufdiode D3 antiparallel geschaltet ist, und einen vierten abschaltbaren Halbleiterschalter H4, dem eine vierte Freilaufdiode D4 antiparallel geschaltet ist, wobei der dritte und der vierte Halbleiterschalter H3, H4 in einer zweiten Halbleiterreihenschaltung miteinander verbunden sind und gleiche Durchlassrichtung aufweisen. Die beiden Halbleiterreihenschaltungen sind parallel zueinander und zu einem Energiespeicher C in Form eines Kondensators angeordnet, an dem eine Kondensatorspannung Uc ansteht. Des Weiteren umfasst das Schaltmodul SM1 ferner eine erste Anschlussklemme X1, die zwischen den Halbleiterschaltern H1, H2 der ersten Halbleiterreihenschaltung angeordnet ist, und eine zweite Anschlussklemme X2, die zwischen den Halbleiterschaltern H3, H4 der zweiten Halbleiterreihenschaltung angeordnet ist. Durch geeignete Ansteuerung der Halbleiterschalter H1-4 ist an den Anschlüssen X1, X2 eine Schaltmodulspannung USM1 erzeugbar, die der Kondensatorspannung Uc entspricht, der negativen Kondensatorspannung -Uc entspricht, oder aber eine Nullspannung. Der Energiespeicher C ist auf einen Betrieb mit einer Energiespeicher- bzw. Kondensatorspannung ausgelegt, die in einem Nennspannungsbereich liegt. Kurzzeitig kann der Energiespeicher C jedoch auch bei einer demgegenüber erhöhten Spannung betrieben werden.

Figur 3 zeigt ein Schaltmodul SM2 des zweiten Typs, das für den Stromrichter der Figur 1 geeignet ist, und das in einer Halbbrückenschaltung geschaltet ist. In einem Kondensatorzweig ist eine Parallelschaltung eines ersten Halbleiterschalters S1 und eines Kondensators C angeordnet. In einem Brückenzweig zwischen zwei Anschlüssen X1, X2 des ersten Schaltmoduls SM2 ist ein zweiter Halbleiterschalter angeordnet. Den beiden Halbleiterschaltern S1, S2 ist jeweils eine Freilaufdiode F antiparallel geschaltet. Durch geeignete Ansteuerung der beiden Halbleiterschalter S1, S2 kann an den Anschlüssen X1, X2 eine Schaltmodulspannung USM2 erzeugbar, die der Kondensatorspannung Uc entspricht, oder aber eine Nullspannung.

## Patentansprüche

1. Verfahren zur Fehlerbehandlung eines Fehlers auf einer Gleichspannungsseite (16) einer Stromrichteranordnung (1) mit einem modularen Mehrstufenstromrichter (2), der Schaltmodule (SM1, SM2) umfasst, die jeweils mehrere Halbleiterschalter (H1-4, S1-2) und wenigstens einen Energiespeicher (C) aufweisen, wobei einige der Schaltmodule Schaltmodule eines ersten Typs (SM1) und einige andere der Schaltmodule Schaltmodule eines zweiten Typs (SM2) sind, wobei im Betrieb der Stromrichteranordnung (1) an Anschlussklemmen (X1, X2) der Schaltmodule des ersten Typs (SM1) jeweils eine positive Schaltmodulspannung, eine negative Schaltmodulspannung oder eine Nullspannung erzeugt werden, und an Anschlussklemmen (X1, X2) der Schaltmodule des zweiten Typs (SM2) jeweils eine positive Schaltmodulspannung oder eine Nullspannung erzeugt werden, bei dem
- nachdem der gleichspannungsseitige Fehler detektiert wurde eine Fehlerbehandlungsregelung der Stromrichteranordnung mit einem proportional-differentiellen Regelverhalten aktiviert wird und
- ein Blindleistungsaustausch zwischen der Stromrichteranordnung (1) und dem Wechselspannungsnetz (3) veranlasst wird, wobei die ausgetauschte Blindleistung von einer Richtung des Wirkleistungsflusses vor dem Fehlereintritt abhängt, wobei induktive Blindleistung ins Wechselspannungsnetz (3) eingespeist wird, falls vor Fehlereintritt Wirkleistung ins Wechselspannungsnetz (3) abgegeben wurde, und wobei kapazitive Blindleistung ins Wechselspannungsnetz (3) eingespeist wird, falls vor Fehlereintritt Wirkleistung aus dem Wechselspannungsnetz (3) aufgenommen wurde.

2. Verfahren nach einem der vorangehenden Ansprüche, wobei für einen der Blindleistung zugeordneten Blindstrom ein konstanter Wert vorgegeben wird.

3. Verfahren nach einem der vorangehenden Ansprüche 1 bis 2, wobei ein der Blindleistung zugeordneter Blindstrom dynamisch anhand Stromrichtermesswerte und Stromrichtersollwerte ermittelt wird.

4. Verfahren nach einem der vorangehenden Ansprüche, wobei die Nennspannung der Schaltmodule des ersten Typs (SM1) und/oder des zweiten Typs (SM2) zwischen 1 kV und 5 kV liegt.

5. Verfahren nach einem der vorangehenden Ansprüche, wobei die Schaltmodule des ersten Typs (SM1) Vollbrückenschaltmodule sind.

6. Verfahren nach einem der vorangehenden Ansprüche, wobei die Schaltmodule des zweiten Typs (SM2) Halbbrückenschaltmodule sind.

7. Verfahren nach einem der vorangehenden Ansprüche, wobei mittels eines zusätzlichen gleichspannungsseitigen Parallelpfades (18) mit einer Diode (20) und einem Ableiter (19) eine gleichspannungsseitige negative Spannung begrenzt wird.

8. Stromrichteranordnung (1) mit einem modularen Mehrstufenstromrichter (2), der Schaltmodule (SM1,2) umfasst, die jeweils über mehrere Halbleiterschalter (H1-4, S1-2) und wenigstens einen Energiespeicher (C) verfügen, wobei einige der Schaltmodule Schaltmodule eines ersten Typs (SM1) und einige andere der Schaltmodule Schaltmodule eines zweiten Typs (SM2) sind, wobei im Betrieb der Stromrichteranordnung (1) an Anschlussklemmen (X1, X2) der Schaltmodule des ersten Typs (SM1) jeweils eine positive Schaltmodulspannung, eine negative Schaltmodulspannung oder eine Nullspannung erzeugt werden, und an Anschlussklemmen (X1, X2) der Schaltmodule des zweiten Typs (SM2) jeweils eine positive Schaltmodulspannung oder eine Nullspannung erzeugt werden, **gekennzeichnet durch** eine Regelungseinrichtung (12), die zum Durchführen eines Verfahrens nach einem der vorangehenden Ansprüche 1 bis 7 eingerichtet ist.

## Claims

1. Method for handling a fault on a DC voltage side (16) of a converter arrangement (1) having a modular multilevel converter (2) which comprises switching modules (SM1, SM2), each of which has a plurality of semiconductor switches (H1-4, S1-2) and at least one energy store (C), wherein some of the switching modules are switching modules of a first type (SM1) and some other of the switching modules are switching modules of a second type (SM2), wherein, during operation of the converter arrangement (1), a positive switching module voltage, a negative switching module voltage or a zero voltage are respectively generated at terminals (X1, X2) of the switching modules of the first type (SM1), and a positive switching module voltage or a zero voltage are respectively generated at terminals (X1, X2) of the switching modules of the second type (SM2),
in which method
- once the DC voltage-side fault has been detected, fault handling control of the converter arrangement with a proportional-plus-derivative control action is activated and
- a reactive power exchange between the converter arrangement (1) and the AC voltage grid (3) is initiated, wherein the exchanged reactive power depends on a direction of the active power flow before the fault occurred, wherein inductive reactive power is fed into the AC voltage grid (3) if active power was being supplied to the AC voltage grid (3) before the fault occurred, and wherein capacitive reactive power is fed into the AC voltage grid (3) if active power was being drawn from the AC voltage grid (3) before the fault occurred.

2. Method according to one of the preceding claims, wherein a constant value is specified for a reactive current assigned to the reactive power.

3. Method according to either of preceding Claims 1 and 2, wherein a reactive current assigned to the reactive power is determined dynamically on the basis of converter measured values and converter setpoint values.

4. Method according to one of the preceding claims, wherein the rated voltage of the switching modules of the first type (SM1) and/or of the second type (SM2) lies between 1 kV and 5 kV.

5. Method according to one of the preceding claims, wherein the switching modules of the first type (SM1) are full-bridge switching modules.

6. Method according to one of the preceding claims, wherein the switching modules of the second type (SM2) are half-bridge switching modules.

7. Method according to one of the preceding claims, wherein, by means of an additional DC voltage-side parallel path (18) having a diode (20) and an arrester (19), a negative DC voltage-side voltage is limited.

8. Converter arrangement (1) having a modular multilevel converter (2) which comprises switching modules (SM1,2), each of which has a plurality of semiconductor switches (H1-4, S1-2) and at least one energy store (C), wherein some of the switching modules are switching modules of a first type (SM1) and some other of the switching modules are switching modules of a second type (SM2), wherein, during operation of the converter arrangement (1), a positive switching module voltage, a negative switching module voltage or a zero voltage are respectively generated at terminals (X1, X2) of the switching modules of the first type (SM1), and a positive switching module voltage or a zero voltage are respectively generated at terminals (X1, X2) of the switching modules of the second type (SM2),
**characterized by** a control device (12) which is configured to carry out a method according to one of preceding Claims 1 to 7.

## Revendications

1. Procédé de traitement d'un défaut d'un côté (16) de la tension continue d'un montage (1) à convertisseur comprenant un convertisseur (2) modulaire à plusieurs étages, qui comprend des modules (SM1, SM2) de coupure, qui ont chacun plusieurs interrupteurs (H1-4, S1-2) à semiconducteur et au moins un accumulateur (C) d'énergie, dans lequel certains des modules de coupure sont des modules de coupure d'un premier type (SM1) et quelques autres des modules de coupure sont des modules de coupure d'un deuxième type (SM2), dans lequel, en fonctionnement du montage (1) à convertisseur, on produit, aux bornes (X1, X2) de connexion des modules de coupure du premier type (SM1), respectivement une tension de module de coupure positive, une tension de module de coupure négative ou une tension nulle et on produit, aux bornes (X1, X2) de connexion des modules de coupure du deuxième type (SM2), respectivement une tension de module de coupure positive ou une tension nulle, dans lequel
- après avoir détecté un défaut du côté de la tension continue, on active une régulation de traitement de défaut du montage à convertisseur ayant un comportement de réglage proportionnel-différentiel,
- on provoque un échange de puissance réactive entre le montage (1) à convertisseur et le réseau (3) à tension alternative, dans lequel la puissance réactive échangée dépend d'une direction du flux de puissance active avant la survenance du défaut, dans lequel on injecte de la puissance réactive inductive dans le réseau (3) à tension alternative si, avant la survenance du défaut, de la puissance active a été cédée au réseau (3) à tension alternative et dans lequel on injecte de la puissance réactive capacitive dans le réseau (3) à tension alternative si, avant la survenance du défaut, de la puissance active a été reçue du réseau (3) à tension alternative.

2. Procédé suivant l'une des revendications précédentes, dans lequel on prescrit une valeur constante d'un courant réactif associé à la puissance réactive.

3. Procédé suivant l'une des revendications 1 à 2 précédentes, dans lequel on détermine un courant réactif associé à la puissance réactive d'une manière dynamique, à l'aide de valeurs de mesure de convertisseur et de valeurs de consigne.

4. Procédé suivant l'une des revendications précédentes, dans lequel la tension nominale des modules de coupure du premier type (SM1) et/ou du deuxième type (SM2) est comprise entre 1 kV et 5 kV.

5. Procédé suivant l'une des revendications précédentes, dans lequel les modules de coupure du premier type (SM1) sont des modules de coupure à pont complet.

6. Procédé suivant l'une des revendications précédentes, dans lequel les modules de coupure du deuxième type (SM2) sont des modules de coupure à demi-pont.

7. Procédé suivant l'une des revendications précédentes, dans lequel on limite une tension négative du côté de la tension continue au moyen d'un chemin (18) parallèle supplémentaire du côté de la tension continue ayant une diode (20) et un parafoudre (19) .

8. Montage (1) à convertisseur comprenant un convertisseur (2) modulaire à plusieurs étages , qui comprend des modules (SM1, 2) de coupure, qui ont chacun plusieurs interrupteurs (H1-4, S1-2) à semiconducteur et au moins un accumulateur (C) d'énergie, dans lequel certains des modules de coupure sont des modules de coupure d'un premier type (SM1) et quelques autres des modules de coupure sont des modules de coupure d'un deuxième type (SM2), dans lequel, en fonctionnement du montage (1) à convertisseur, on produit, aux bornes (X1, X2) de connexion des modules de coupure du premier type (SM1), respectivement une tension de module de coupure positive, une tension de module de coupure négative ou une tension nulle et on produit, aux bornes (X1, X2) de connexion des modules de coupure du deuxième type (SM2), respectivement une tension de module de coupure positive ou une tension nulle,
**caractérisé par** un dispositif (12) de régulation, qui est conçu pour effectuer un procédé suivant l'une des revendications 1 à 7 précédentes.
